# EUROPÄISCHE PATENTANMELDUNG

(11) **EP 2 367 085 A1**
(43) Veröffentlichungstag der Anmeldung: **21.09.2011**
(21) Anmeldenummer: 10075751.7
(22) Anmeldetag: 09.12.2010
(51) Int. Cl.: G05B 19/05, B66B 5/00

(54) **Vorrichtung zur Fahrtregelung für eine ein- oder doppeltrümige Förderanlage und Verfahren zum Ausführen der Fahrtregelung**

(30) Priorität: 17.12.2009 DE 102009058571
(71) Anmelder: Elpro GmbH, 13053 Berlin (DE); Elektro-Anlagen-Ernst GmbH, 07552 Gera-Roschütz (DE)
(72) Erfinder: Herget, Michael, 07546 Gera (DE)

(57) **Zusammenfassung**

Die Erfindung betrifft eine Vorrichtung zur Fahrtregelung für eine ein- oder doppeltrümige Förderanlage. Erfindungsgemäß ist eine Fahrtregelungseinheit (1) aus mindestens einem ersten speicherprogrammierbaren Steuerungssystem (2) mit einem Führungs- und Überwachungsteil zum Ausführen einer Steuerung für eine Fördermaschine und einem zweiten speicherprogrammierbaren Steuerungssystem (3) zum Ausbilden eines redundanten zweiten Führungs- und Überwachungsteils in Verbindung mit an einer Antriebsseite eines Seilträgers und/oder an dem Seilträger angeordneten Signalgebern für eine Fahrgeschwindigkeit (4) und Signalgebern für einen Fahrweg (5) vorgesehen.
Verfahrensseitig wird bei dem Ausführen einer Fahrtreglung ein zweikanaliges diversitäres Auswertesystem mit hardware-verschiedenen speicherprogrammierbaren Steuerungssystemen zum Betreiben jeweils eines Teilsicherheitskreises verwendet, wobei jeder Teilsicherheitskreis über getrennte Schützkontakte in einen Sicherheitskreis der Förderanlage eingebunden wird und beide Kanäle des Auswertesystems über eine DP/DP-Kopplung einen Signalaustausch ausführen.

## Beschreibung

Die Erfindung betrifft eine Vorrichtung zur Fahrtregelung für eine ein- oder doppeltrümige Förderanlage nach dem Oberbegriff des Anspruchs 1. Die Erfindung betrifft weiterhin ein Verfahren zum Ausführen einer Fahrtregelung für eine derartige Förderanlage nach dem Oberbegriff des Anspruchs 10.

Derartige Förderanlagen werden vor allem im Bergwerksanlagen betrieben. Sie dienen zum Befördern von Lasten und/oder Personen in vertikal verlaufenden Schachtanlagen. Diese Anlagen weisen eine Fahrgeschwindigkeit von bis zu 10 m/s auf. Sie sind in der Regel als Treibscheibenanlagen oder Doppeltrommelanlagen mit oder ohne Versteckeinrichtung ausgeführt.

Für derartige Förderanlagen sind für gewöhnlich mehrere Betriebsweisen vorgesehen. Eine erste Betriebsweise ist insbesondere durch eine Güterförderung, eine zweite Betriebsweise durch eine Förderung von Personen gegeben. Diese unterscheiden sich insbesondere durch ein unterschiedliches Fahrverhalten der Förderanlage, beispielsweise unterschiedliche Beschleunigungs- oder Verzögerungswerte in den Endabschnitten der Schachtanlage oder unterschiedliche Fahrgeschwindigkeiten im Schacht selbst. Es hat sich beim Betrieb derartiger Förderanlagen gezeigt, dass eine automatische Fahrsteuerung, die insbesondere bei einer Güterförderung angewendet wird, bei anderen Betriebsweisen der Anlage nachteilig ist.

Es besteht somit die Aufgabe, eine Vorrichtung zur Fahrtregelung für eine Förderanlage anzugeben, die auch von Hand betrieben werden kann, aber andererseits die erforderliche Betriebssicherheit bietet.

Die Aufgabe wird in ihrem Vorrichtungsaspekt mit einer Vorrichtung zur Fahrtregelung für eine ein- oder doppeltrümige Förderanlage mit den Merkmalen des Anspruchs 1 gelöst. In ihrem Verfahrensaspekt erfolgt die Lösung der Aufgabe mit einem Verfahren zur Fahrtregelung einer ein- oder doppeltrümigen Förderanlage mit den Merkmalen des Anspruchs 10.

Die Vorrichtung enthält eine Fahrtregelungseinheit aus mindestens einem ersten speicherprogrammierbaren Steuerungssystem zum Ausbilden eines Führungs- und Überwachungsteils zum Ausführen einer Steuerung für eine Fördermaschine und einem zweiten speicherprogrammierbaren Steuerungssystem zum Ausbilden eines redundanten zweiten Führungs- und Überwachungsteils. In Verbindung damit sind an einer Antriebsseite eines Seilträgers und/oder an dem Seilträger Signalgeber für eine Fahrgeschwindigkeit und Signalgeber für einen Fahrweg vorgesehen.

Der erfindungsgemäße Grundgedanke besteht darin, ein speicherprogrammierbares Steuerungssystem zur Fahrtregelung einzusetzen. Ein solches System weist den Vorteil auf, dass die Art und Weise der Fahrtregelung auf einfache Art mittels einer Programmierung vorbestimmbar ist. Damit lassen sich insbesondere Fahrparameter vorgeben, die auch bei einem Handbetrieb sichern, dass für die Fahrsicherheit gefährliche Parameter nicht überschritten werden. Das speicherprogrammierbare Steuerungssystem ist redundant angelegt. Hierzu ist ein zweites speicherprogrammierbares Steuerungssystem vorgesehen. Damit wird gewährleistet, dass die von beiden Steuerungssystemen erfassten Betriebsparameter gleichermaßen richtig verarbeitet werden.

Zweckmäßigerweise weisen das erste speicherprogrammierbare Steuerungssystem und das zweite speicherprogrammierbare Steuerungssystem voneinander verschieden ausgebildete Prozessoreinheiten und Betriebssysteme auf. Dadurch wird sichergestellt, dass technische Defekte oder unentdeckte Programmierfehler mit hoher Wahrscheinlichkeit nur in einem der beiden Steuerungssysteme, aber nicht in beiden in gleicher Weise auftreten.

Das erste und das zweite speicherprogrammierbare Steuerungssystem sind über eine DP/DP-Kopplereinheit miteinander verbunden. Die DP/DP-Kopplereinheit realisiert dabei einen zwischen den Steuerungssystemen vorhandenen Feldbus. Eine derartige Verbindung greift auf ein bewährtes und sicheres Übertragungsprotokoll zurück.

Als Signalgeber für eine Fahrgeschwindigkeit ist ein netzspannungsunabhängiger Tachogenerator vorgesehen. Dieser ist mit einem Schwellwertschalter zum Erfassen einer Übergeschwindigkeit ausgestattet. Der Tachogenerator liefert ein der vorliegenden Geschwindigkeit entsprechendes Spannungssignal. Diese Messwerterfassung benötigt keine externe Spannungsversorgung. Der Schwellwertschalter gibt beim Erreichen eines über einer gegebenen Grenze liegenden Geschwindigkeitswertes ein gesondertes Messsignal aus.

Zweckmäßigerweise ist eine rückwirkungsfrei zuschaltbare Prüfeinrichtung für eine punktweise Geschwindigkeitsüberwachung mit einer in einem Absteuer-und/oder Verzögerungsbereich montierten Schachtschalteranordnung vorgesehen. Damit kann am Fahrweg selbst die Fördergeschwindigkeit ermittelt und überwacht werden.

Als Signalgeber für den Fahrweg ist bei einer zweckmäßigen Ausführungsform ein Winkelschrittencoder vorgesehen, mit dem sich der Fahrweg präzise erfassen lässt.

Zur Signalübertragung von dem Tachogenerator und dem Winkelschrittencoder an das erste und/oder zweite speicherprogrammierbare Steuerungssystem ist zweckmäßigerweise eine Profibus-DP-Verbindung vorgesehen.

Das erste und das zweite speicherprogrammierbare Steuerungssystem weisen je einen Ausgang und einen Eingang für einen Signalaustausch für eine gegenseitige Gleichlaufüberwachung auf. Damit können voneinander abweichende Steuerungsabläufe innerhalb der Steuerungssysteme erkannt und daraus resultierende Gefährdungen bereits im Ansatz vermieden werden.

Diese Ein- und Ausgänge sind bei einer zweckmäßigen Ausführungsform auf nach dem Ruhestromprinzip angesteuerte Schütze gelegt.

Ein Verfahren zum Ausführen einer Fahrtregelung für eine ein-oder doppeltrümige Förderanlage zeichnet sich durch ein Verwenden eines zweikanaligen diversitären Auswertesystems mit hardwareverschiedenen speicherprogrammierbaren Steuerungssystemen zum Betreiben jeweils eines Teilsicherheitskreises aus. Dabei wird jeder Teilsicherheitskreis über getrennte Schützkontakte in einen Sicherheitskreis der Förderanlage eingebunden. Beide Kanäle des Auswertesystems führen in Verbindung damit über eine DP/DP-Kopplung einen Signalaustausch aus.

Bei der Ausführung des Verfahrens erfolgt für eine Überwachung einer Fahrgeschwindigkeit innerhalb eines Schachtes eine punktweise Geschwindigkeitsüberwachung und/oder ein Erzeugen geschwindigkeitsabhängiger Spannungssignale mittels Tachogeneratoren. Dabei wird für jedes speicherprogrammierbare Steuerungssystem eine teufenabhängige Geschwindigkeit für jeden Kanal des Auswertesystems errechnet und verglichen.

Bei einer vorteilhaften Ausführungsform werden bei der Ausführung des Verfahrens durch jedes speicherprogrammierbare Steuersystem Soll-Geschwindigkeitswerte errechnet. Diese werden an einen Leistungsteil einer Antriebsvorrichtung ausgegeben.

Zweckmäßigerweise erfolgt das Errechnen der Soll-Geschwindigkeitswerte dadurch, indem teufenabhängige Absteuerkurven und/oder Sollwerte für eine Geschwindigkeit des Antriebs und/oder eine Überwachungskurve für eine kontinuierliche Geschwindigkeitsüberwachung erzeugt werden. Dies wird dadurch ausgeführt, indem eine Menge teufenabhängiger Sollgeschwindigkeitsteilgeraden mit je einem Offsetparameter und je einem Steigungsparameter erzeugt werden. Dabei werden der je eine Steigungsparemeter und der je eine Offsetparameter für jede Sollgeschwindigkeitsteilgerade redundant in jedem speicherprogrammierbaren Steuersystem errechnet und auf Gleichheit überwacht. Die mit den Sollgeschwindigkeitsteilgeraden errechneten Geschwindigkeitssollwerte werden normiert und an einen Antriebsregler als dem Leistungsteil der Antriebsvorrichtung übergeben.

Die Überwachungskurve wird bei einer zweckmäßigen Ausführungsform aus der Absteuerkurve durch eine Skalierung errechnet. Dabei wird eine gemessene Ist-Geschwindigkeit dynamisch mit den Werten der Überwachungskurve verglichen. Bei einem Überschreiten der Ist-Geschwindigkeit wird schließlich eine Sicherheitsbremse ausgelöst. Die Absteuerkurve beschreibt somit einen absoluten Grenzbereich für die Überwachung der Ist-Geschwindigkeit der Förderanlage. Die Überwachungskurve führt eine zusätzliche Sicherheitstoleranz ein. Diese wird dazu benötigt, um einen zusätzlichen Spielraum für das Ansprechen der Sicherheitsbremse zu gewinnen und gleichzeitig zu sichern, dass der durch die Absteuerkurve definierte Grenzbereich der Steuerung in keinem Fall überschritten wird.

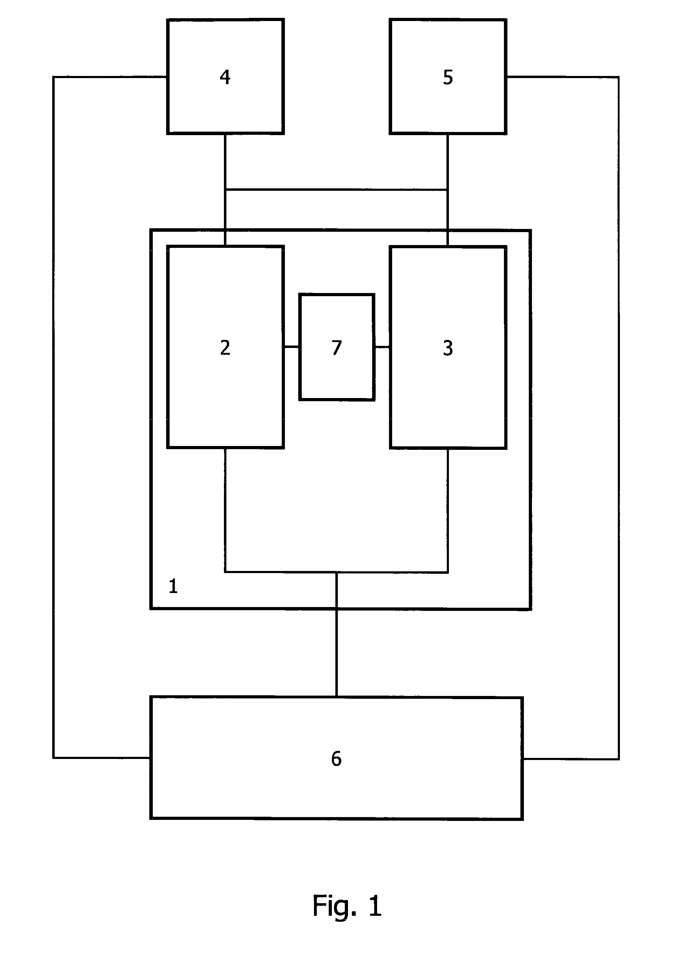

Die Vorrichtung zur Fahrtregelung und das Verfahren zum Ausführen der Fahrtregelung sollen nachfolgend anhand von Ausführungsbeispielen näher erläutert werden. Zur Verdeutlichung dienen die Figuren 1 bis 12. Es werden für gleiche oder gleichwirkende Teile die selben Bezugszeichen verwendet.

Es zeigt:
Fig. 1 eine Übersichtsdarstellung grundlegender Komponenten der Fahrtregelungsvorrichtung,
Fig. 2 eine Übersichtsdarstellung signalgebender Komponenten für Fahrgeschwindigkeit und Fahrweg,
Fig. 3 einige beispielhafte Aus- und Eingänge der speicherprogrammierbaren Steuerungssysteme,
Fig. 4 eine Darstellung des Grundprinzips der Gleichlaufüberwachung zwischen den speicherprogrammierbaren Steuerungssystemen,
Fig. 5 eine beispielhafte Kopplung der Tachogeneratoren und Winkelschrittencoder mit den Antriebselementen der Fördermaschine,
Fig. 6 eine beispielhafte Schachtschalteranordnung in einer doppeltrümigen Förderanlage,
Fig. 7 eine beispielhafte Darstellung einer Anzeige von Fahrkurvenparametern,
Fig. 8 eine beispielhafte Darstellung einer Anzeige zur Definition von Sohlenbereichen, Teufenzeigern und zur Teufenrechnung,
Fig. 9 eine Visualisierung der Förderanlage,
Fig. 10 ein beispielhaftes Fahrregler-Protokoll,
Fig. 11 eine Visualisierung des Bremsapparates,
Fig. 12 eine Visualisierung der Antriebskomponenten der Fördermaschine.

Bei der nachfolgenden Beschreibung wird von einer Fördermaschine ausgegangen, die als doppeltrümige Treibscheibenanlage mit einem ersten Trum und einem zweiten Trum ausgebildet ist. Jedes Trum weist einen Förderkorb auf, der in mehrere Etagen unterteilt sein kann. Einer der beiden Förderkörbe ist an einem oberschlägigen Seil angeschlagen.

Fig. 1 zeigt eine Übersichtsdarstellung der Fahrtregelungsvorrichtung. Die Fahrregelungsvorrichtung umfasst eine Fahrtregelungseinheit 1 aus einem ersten speicherprogrammierbaren Steuerungssystem 2 und einem zweiten speicherprogrammierbaren Steuerungssystem 3. Diese bilden zueinander redundant angelegte Führungs- und Überwachungsteile der Fahrtregelungsvorrichtung. Für die speicherprogrammierbaren Steuerungssysteme wird bei der nachfolgenden Beschreibung die Abkürzung SPS verwendet.

Jeder der beiden SPS werden Signale über Eingangsbaugruppen oder eine dezentrale Peripherie über einen dafür vorgesehenen DP-Bus zugeführt. Die berechneten Größen der einzelnen SPS werden über eine zwischen diesen ausgebildete Kopplung unter den SPS ausgetauscht. Die von den SPS gebildeten Ausgangssignale werden mit Wirkung in den Sicherheitskreis übertragen. Zweckmäßigerweise wird dabei auf Schützkontakte oder Relais zurückgegriffen, die an die binären Ein- und Ausgänge der jeweils anderen SPS geschaltet sind. Die SPS prüfen den Gleichlauf und die Plausibilität der Signale.

Sowohl die erste SPS 2 als auch die zweite SPS 3 sind mit Signalgebern für eine Fahrgeschwindigkeit 4 und mit Signalgebern für einen Fahrweg 5 verbunden und geben Steuerungssignale an dafür vorgesehene Teile einer Fördermaschine 6 aus. Beide SPS sind damit Bestandteile je eines zwischen die Signalgeber 4 und 5 und die Fördermaschine 6 geschalteten Teilsicherheitskreises.

Zwischen der ersten SPS 2 und der zweiten SPS 3 ist eine DP/DP-Kopplereinheit 7 vorgesehen. Diese ermöglicht einen zwischen der ersten SPS und der zweiten SPS ablaufenden Signalaustausch.

Jeder DP-Bus ist für jede SPS separat aufgebaut. Die einzige Verbindung zwischen den SPS wird über einen so genannten DP/DP-Koppler realisiert. Bei Ausfall einer Komponente innerhalb des DP-Busses wird ein SPS-Stoppsignal erzeugt. Dabei fallen die Ausgangsrelais der SPS ab, wobei aufgrund des Ruhestromprinzips eine Sicherheitsbremse der Förderanlage aufgelegt wird.

Die so gebildete Anordnung bildet ein zweikanaliges Auswertesystem. Dieses Auswertesystem ist zweckmäßigerweise diversitär ausgebildet. Das bedeutet, dass für die erste SPS 2 und die zweite SPS 3 jeweils auf verschiedene Hardware zurückgegriffen wird. So kann beispielsweise die SPS 2 als ein Steuerungssystem des Typs S7-400 und die SPS 3 als ein Steuerungssystem des Typs S7-300 der Firma Siemens realisiert sein. Beide Kanäle bilden damit jeweils einen über die beiden SPS realisierten Teilsicherheitskreis aus. Dieser ist jeweils in jeder der beiden SPS softwaremäßig implementiert. Beide Kanäle werden jeweils über getrennte Relaiskontakte in einen gegebenen Sicherheitskreis der Fördermaschine eingebunden.

Die Verbindung der beiden SPS mit den peripheren Komponenten 4, 5 und 6 erfolgt zweckmäßigerweise über ein Busübertragungssystem. Hierzu wird insbesondere auf eine Profibus-DP-Verbindung zurückgegriffen. Als Anschaltbaugruppen für die Peripherie können beispielsweise WAGO-Klemmen für digitale und analoge Signale eingesetzt werden. Im Unterschied zu den hardwareverschiedenen SPS sind die Bussysteme hardwaregleich, d.h. homogen, ausgebildet.

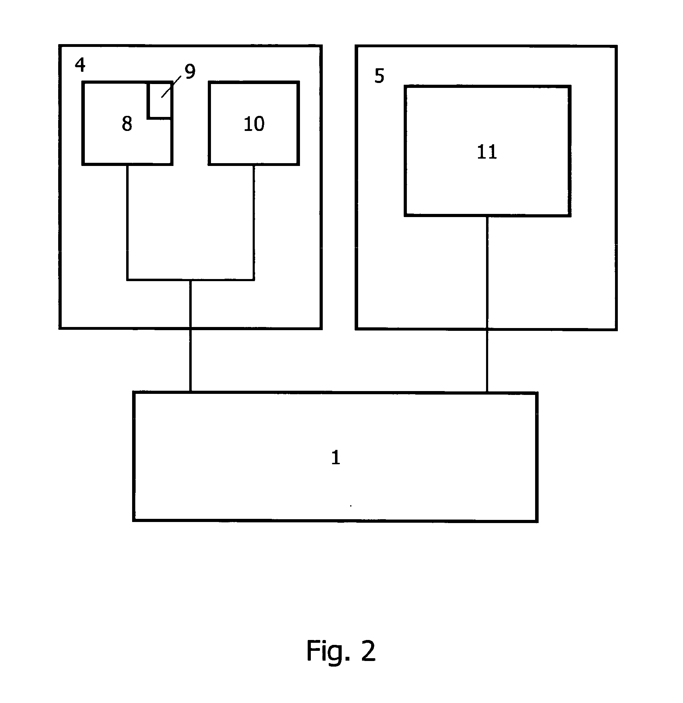

Fig. 2 zeigt eine Übersichtsdarstellung signalgebender Komponenten für Fahrgeschwindigkeit und Fahrweg. Als signalgebende Komponenten für die Fahrgeschwindigkeit 4 ist zum einen ein Tachogenerator 8 mit einem Schwellwertschalter 9 vorgesehen. Der Tachogenerator arbeitet netzspannungsunabhängig. Der Schwellwertschalter dient zum Signalisieren einer Übergeschwindigkeit.

Zusätzlich dazu kommt eine Schachtschalteranordnung 10 zum Einsatz. Diese bildet eine punktweise Geschwindigkeitsüberwachungseinrichtung, die zur Überwachung der Fahrgeschwindigkeit während der Gleichlaufphase und in den Verzögerungsbereichen der Förderanlage. Der Tachogenerator dient als bevorzugter Istwert-Geber für die Fahrgeschwindigkeit, die Schachtschalteranordnung bietet eine zusätzliche Überwachungsmöglichkeit für die Fahrgeschwindigkeit des Förderkorbes an bestimmten Punkten des Schachtes. Als Schachtschalter werden vorzugsweise Magnetschalter mit einer Bergbauzulassung eingesetzt. Diese ist mit einer Prüfeinrichtung gekoppelt, die zuschaltbar ausgeführt ist und rückwirkungsfrei mit dem System zusammenwirkt.

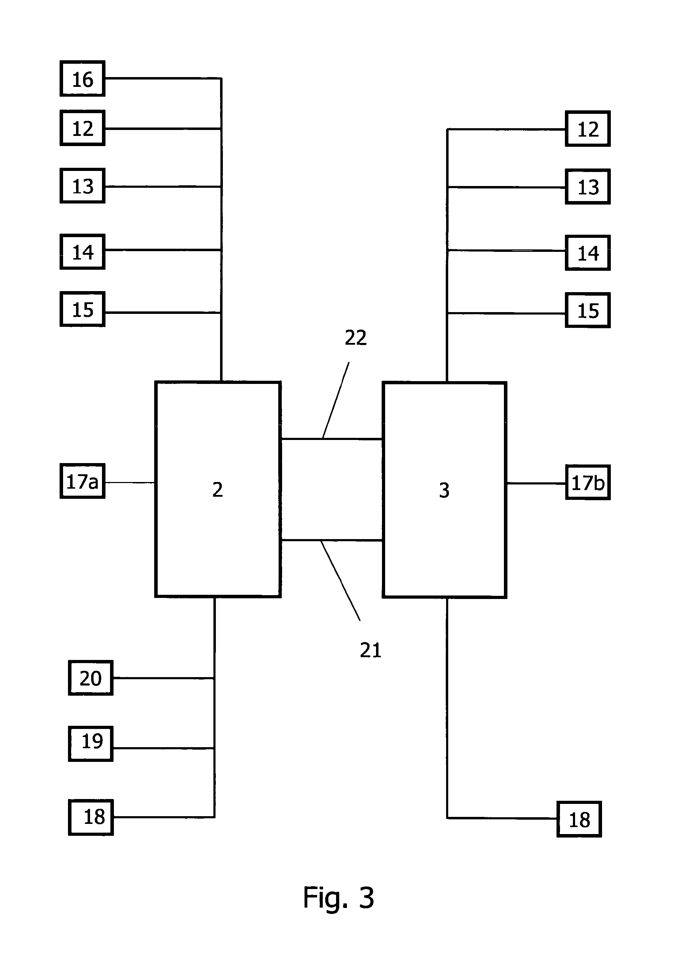

Fig. 3 zeigt einige beispielhafte Aus- und Eingänge der SPS 2 und der SPS 3 und der an diesen Eingängen anliegenden und von beiden Komponenten verarbeiteten Signale. Als elektrische Komponenten können kommerziell verfügbare Standardteile verwendet werden. Die Verknüpfung mit den zentralen SPS wird nachfolgend beispielhaft beschrieben.

Die meisten Ein- und Ausgänge sind sowohl an der SPS 2 als auch an der SPS 3 vorgesehen und somit redundant angelegt. An einem ersten redundanten Ein- und Ausgang 12 werden Signale aus und zu einer Signalanlage und Sperreinrichtung empfangen und/oder ausgegeben. Des weiteren werden über den Ein- und Ausgang 12 Signale mit einer DP-Peripherie getauscht, die zur Signalgewinnung dient. Dies betrifft insbesondere Ein- und Ausgaben von "Fertig"-Signalen, Signalen über eine gesperrte Abfahrt oder Notsignale. In Verbindung damit werden über den Ein- und Ausgang 12 auch Signale übertragen, die nicht notwendigerweise redundant an beiden SPS-Einheiten anliegen müssen. Dies betrifft insbesondere Signale, die für ein Taglogging einer Visualisierung verwendet werden.

An einem redundant an der SPS 2 und der SPS 3 vorhandenen Ein- und Ausgang 13 werden zusätzliche Signale in einem Schaltschrank des Fahrtreglers, Signale von Absteuerschaltern und (bei einer doppeltrümigen Förderanlage) Signale von redundanten Torgebern in Verbindung mit einer Antivalenzprüfung ausgetauscht. Der Ein- und Ausgang 13 ist ebenfalls für Steuersignale für Sicherheitseinrichtungen an Schachttoren, insbesondere für Lichtschranken, vorgesehen.

Ein redundanter Ein- und Ausgang 14 tauscht Signale mit dem Tachogenerator 8 sowie mit dem Winkelschrittencoder 11 sowie mit einer Treibwelle der Fördermaschine aus. Bei einer doppeltrümigen Anlage kann der Ein- und Ausgang bezüglich des Winkelschrittencoders auch nicht redundant angelegt sein. In einem solchen Fall wird über den Ein- und Ausgang an der jeweiligen SPS das Signal des Winkelschrittencoders von jedem der beiden Trume eingelesen.

Der Ein- und Ausgang 15 ist vollständig redundant ausgeführt. Dieser dient als Schnittstelle für Signale über den Istwert eines Fahrhebels, über die aktuelle Fahrtrichtung und über den momentanen Betriebszustand eines Automatik- oder Handbetriebs.

Der Ein- und Ausgang 16 dient einer Ausgabe der von einer Bremsanlage einlaufenden Signale zum Zweck einer Visualisierung. Dieser Ein- und Ausgang ist nicht redundant angelegt, sondern nur der SPS 2 zugeordnet. Die erste SPS 2 und die zweite SPS 3 weisen je einen Ein- und Ausgang 17a und 17b für Hardwaresignale auf. Diese sind auf die jeweils in den SPS vorhandene Hardware angepasst und dienen zu deren Programmierung.

Der redundant angelegte Ein- und Ausgang 18 ist für ein Ausgangsrelais zum Sperren einer Abfahrt, für ein Not-Aus-Signal, ein Signal einer stehenden und/oder in Richtung Hängen schleichenden Maschine und/oder für ein Aufholsignal vorgesehen.

Die Ein- und Ausgänge 19 und 20 dienen als Schnittstellen für Ausgangssignale für einen Bremssollwert bei einem Automatikbetrieb bzw. für einen Sollwert weiterer Umformereinrichtungen.

Der Datenaustausch zwischen der SPS 2 und der SPS 3 erfolgt wie beschrieben über einen DP/DP-Koppler. Dieser weist Vorrichtungen 21 und 22 für eine Bustrennung auf.

Die so ausgebildete redundant angelegt Steuereinheit erlaubt zweikanalige Überwachungen, die in den Sicherheitskreis der Förderanlage wirken. Dabei wird insbesondere ein Gleichlauf beider Steuerkanäle erfasst und dabei auftretende Fehler erkannt. Hierzu sind in der ersten SPS 2 und in der zweiten SPS 3 Überwachungsfunktionen softwareartig implementiert.

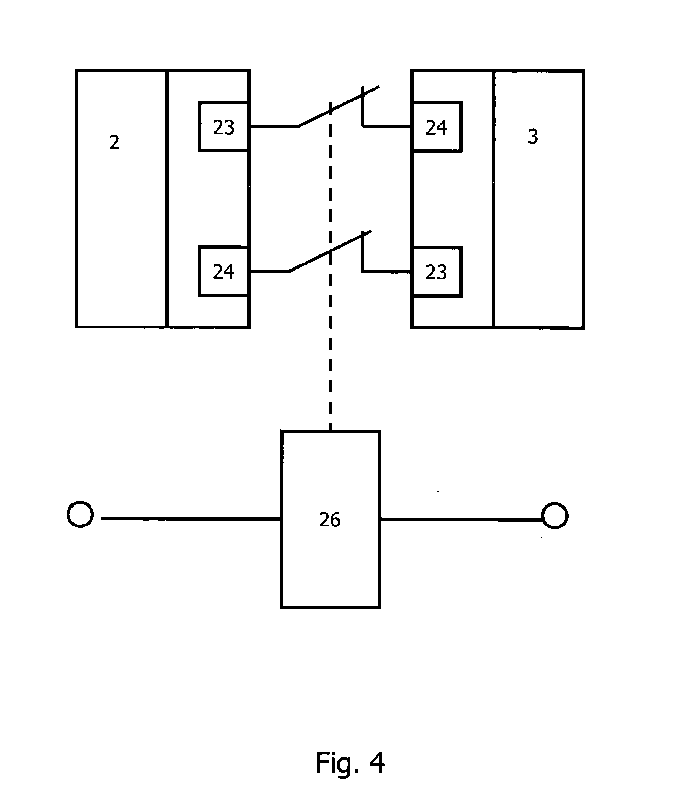

Das für die Gleichlaufüberwachung verfolgte Grundprinzip ist in Fig. 4 dargestellt. Die in den SPS programmierten Überwachungsfunktionen greifen auf Ein- und Ausgänge 23 und 24 zu, die an der ersten SPS 2 und an der zweiten SPS 3 vorgesehen sind. Diese sind auf Schaltschütze 25 geführt, deren Schaltmechanik 26 nach dem Ruhestromprinzip angesteuert wird. Damit können Drahtbrüche erkannt werden. Die an den Schaltschützen anliegenden und von einer der SPS generierten Signale werden zur Gleichlaufüberwachung von der jeweils anderen SPS ausgewertet. Die Schaltschütze können mit weiteren Kontakten mit dem Sicherheitskreis der Fördermaschine verbunden sein. Bei einem Drahtbruch werden die Schaltschütze getrennt und die nun inaktive Gleichlaufüberwachung löst in jedem der speicherprogrammierbaren Steuerungen 2 und 3 entsprechende Sicherheitsroutinen aus.

Die in beiden SPS auf Gleichlauf überwachten Signale setzen sich zusammen aus Steuersignalen aus den Sicherheitskreisläufen, in beiden SPS errechneten Systemparametern und durch beiden SPS ausgeführte Zustandsüberwachungen. Zweckmäßigerweise werden folgende Steuersignale auf Gleichlauf überwacht: Steuersignale aus Abschlussrelais, Signale aus einem Nachweisrelais über eine schleichende Maschine, Signale aus einem Relais über eine gesperrte Abfahrt, Signale aus Fahrtrichtungsrelais und Signale aus anlagenspezifischen Steuerschützen.

Zweckmäßigerweise wird eine Gleichlaufüberwachung folgender SPS-intern erzeugter oder verarbeiteter Signale ausgeführt: ein errechneter Wert für die Teufe, bei doppeltrümigen Förderanlagen der jeweils für einen ersten und einen zweiten Trum errechnete Teufenwert, Überwachungsparameter des Winkelschrittencoders, insbesondere gewisse vorgegebene Grenzwerte, eine Summe der Teufenwerte bei doppeltrümigen Förderanlagen, die aus dem Tachogenerator gewonnen Signale, errechnete, gespeicherte oder eingegebene Sollwertkurven für das Absteuerverhalten der Förderanlage und die Werte der in beiden SPS gespeicherten kontinuierlichen Überwachungskurven für die Fahrgeschwindigkeit der Förderanlage.

Durch beide SPS werden zweckmäßigerweise folgende Überwachungsparamater auf Konsistenz überprüft: ein momentaner Status eines Endschalters bei einer Teufenrechnung, eine Übereinstimmung von Teufenfaktoren, Sprünge in den errechneten Teufen, ein Schaltverhalten der Absteuerschalter, insbesondere deren Schalten außerhalb eines Fensterbereiches, und eine Kontrolle der berechneten Teufe auf eine vordefinierte Abweichung an jedem Absteuerschalter. Weiterhin werden ein Überschreiten von Grenzwerten des oder bei doppeltrümigen Förderanlagen der Winkelschrittencoder ausgeführt. Die erwähnten Überwachungen sind prüfbar ausgeführt. Als Vergleichsgröße dient eine softwareartige Simulation, die die Auswirkungen jedes veränderlichen Prüfparameters auf den Zustand der weiteren Anlagenparameter simuliert. Zweckmäßigerweise sind hierbei Schrittketten vorgesehen, so dass keine zusätzliche Programmiertechnik eingesetzt werden muss. Dadurch sind turnusmäßige Prüfungen zeitlich effizient und exakt ausführbar. Aus Sicherheitsgründen ist eine derartige Prüfung nur dann ausführbar, wenn eine Sicherheitsbremseinrichtung ausgelöst ist. Sie wird über eine Visualisierung an einem externen Computersystem und einen Zugriff auf mindestens eine der beiden SPS ausgeführt.

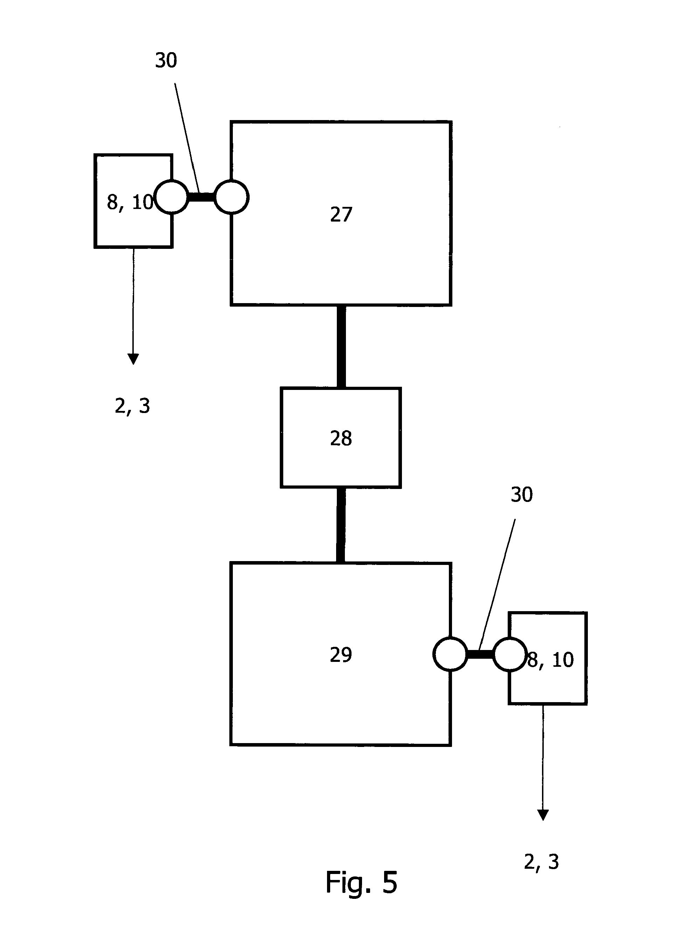

Fig. 5 zeigt eine beispielhafte Kopplung der Tachogeneratoren 8 und Winkelschrittencoder 10 mit den Antriebselementen der Fördermaschine. Entsprechend der redundant angelegten speicherprogrammierbaren Steuerungen 2 und 3 sind auch die Signalgeber für die Geschwindigkeit und den Förderweg doppelt vorhanden. Dabei werden die von diesen zweifach vorhandenen Teilen erzeugten Signale in den SPS auf ihre Konsistenz überprüft. Bei der Darstellung in Fig. 5 wird von einer doppeltrümigen Förderanlage ausgegangen. Bei einer derartigen Anlage bestimmt ein Trum die gesamte Dreh- und Förderrichtung der Anlage. Dabei gilt, dass die an einem Trum ausgeführte Bewegung in den Förderschacht hinein an der Fördermaschine einer Fahrrichtung "Hängen" entspricht. Damit beziehen sich die Berechnungen der Teufen auf diese Festlegungen.

Als Antrieb der Fördermaschine wird bei dem in Fig. 5 gezeigten Ausführungsbeispiel von einem Gleichstrommotor 27 ausgegangen, der von einem hier nicht gezeigten Leonardumformer gespeist wird. Dieser besteht aus einem Anwurfmotor mit einem Anlasser, insbesondere einem Flüssigkeitsanlasser, einem Synchronmotor und einem Gleichstromgenerator. Zur Regelung eines solchen Antriebs wird ein Erregerstrom des Gleichstromgenerators über einen Gleichstromsteller eingespeist. Dieser enthält einen Stromrichter, einen Drehzahlregler und einen Stromregler. Hierzu wird ein 4-Quadrantenbetrieb angewendet. Der von dem Synchronmotor erzeugte konstante Erregerstrom wird ebenfalls über einen Gleichstromsteller eingespeist.

Über ein an dem Gleichstrommotor 27 angeschlossenes Getriebe 28 wird eine Treibscheibe 29 mit einer im wesentlichen konstanten Leistung angetrieben. Sowohl an dem Gleichstrommotor 27 als auch an der Treibscheibe ist je eine Zahnriemenvorrichtung 30 angeordnet, die die Bewegungen dieser Komponenten an je einen Tachogenerator 8 und einen Winkelschrittencoder 10 schlupffrei überträgt.

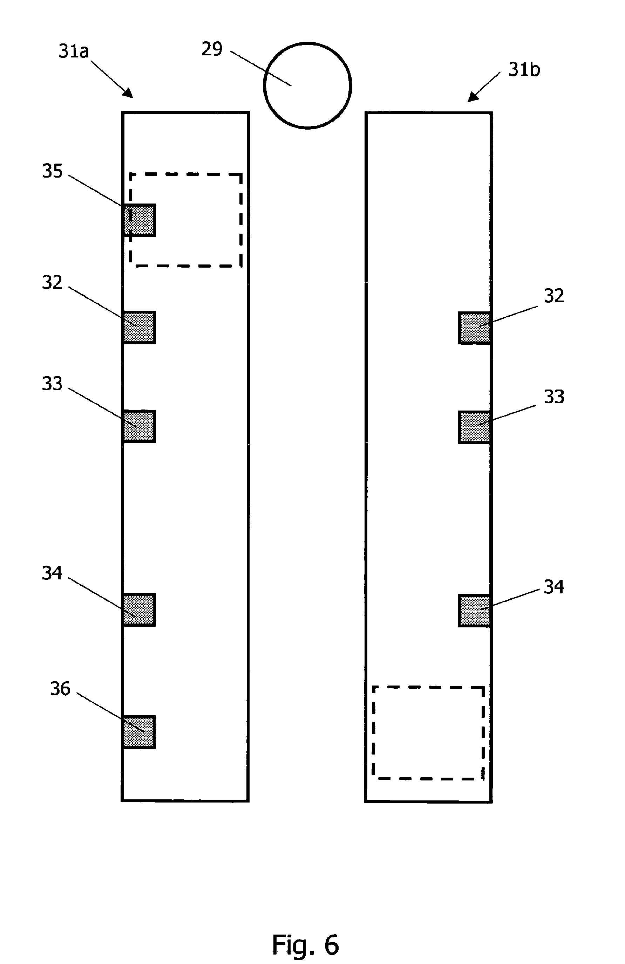

Fig. 6 zeigt eine beispielhafte Schachtschalteranordnung in einem ersten Trum 31 a und einem zweiten Trum 31 b. Als Schachtschalter werden zweckmäßigerweise Magnetschalter mit Bergbauzulassung verwendet. Diese sind vorzugsweise im Absteuer- und Verzögerungsbereich montiert. Die erforderliche Anzahl kann an die konkret vorliegende Förderanlage angepasst werden. Bei dem hier gezeigten Beispiel sind jeweils zwei Absteuerschalter für jedes Trum paarig angelegt. Der zum jeweiligen ersten Absteuerschalter korrespondierende zweite Absteuerschalter ist im Gegentrum der Treibscheibenanlage 29 montiert. Bei dem hier gezeigten Beispiel sind jeweils drei paarige Absteuerschalter 32, 33 und 34 über beide Trums verteilt. Zusätzliche Schalter 35 und 36 sind im Bereich einer hier als "Rasenbank" bezeichneten Stelle bzw. im Bereich des Füllortes auf dem Schachtgrund vorgesehen.

Die paarigen Absteuerschalter führen zwei Funktionen aus. Eine erste Funktion besteht in einer Absteuerkontrolle und einer Geschwindigkeitsüberwachung, die auf den Teufenwert des jeweiligen Trums bezogen ist. Eine zweite Funktion besteht darin, dass diese Absteuerschalter einen Festpunkt für eine Teufenrechnung bilden. Der dadurch definierte Festpunkt wird durch die Werte der Gesamtteufe vermindert um den Teufenwert des Absteuerpunktes gebildet.

Die Ermittlung der Teufe in jedem Trum wird durch die Auswertung der Winkelschrittsignale aus jedem Winkelschrittencoder in Verbindung mit einem Teufenfaktor ausgeführt. Die Berechnung der Teufe erfolgt sowohl im ersten SPS 2 als auch im zweiten SPS 3 für jeden Trum. Jeder Winkelschrittencoder ist über eine Anschaltbaugruppe für die Anbindung an den Profibus direkt an den Profibus der jeweiligen SPS gekoppelt. Der in jedem der SPS empfangene Wert des Winkelschrittencoders und der dabei ermittelte Teufenwert wird über die DP/DP-Kopplung zwischen beiden SPS ausgetauscht und miteinander verglichen.

Die Berechnung der Teufe wird mit folgenden Schritten ausgeführt:
Der Nullpunkt jedes Winkelschrittencoders wird zu Beginn so eingestellt, dass dieser mit einer zweckmäßig gewählten Sicherheitsreserve über dem Teufenwert der Treibscheibe liegt. Dadurch ist gesichert, dass die ausgegebenen Signale immer in einem positiven Bereich liegen und die Teufenberechnung immer mit positiven Zahlen ausgeführt wird. Die konventionsbedingten negativen Anzeigen für die Position eines Förderkorbes im Schacht bzw. die positiven Werte für eine Position eines Förderkorbes über der Oberfläche werden durch softwaremäßig vorgegebene Offsetwerte erzeugt und in einem Visualisierungssystem entsprechend ausgegeben. Als Nullpunkt für die Visualisierung kann beispielsweise der durch den Schachtschalter 35 definierte Ort der Rasenbank gewählt werden, der durch einen bestimmten Punkt des Förderkorbes, beispielsweise durch dessen untere Etage, berührt wird.

Für eine Kalibrierung der Teufenmessung wird eine Eichfahrt der Fördereinrichtung ausgeführt. Diese wird zweckmäßigerweise an einem Steuerpult der Anlage mittels eines Schlüsselschalters ausgelöst, um unbeabsichtigte Neukalibrierungen des Systems und damit Sicherheitsrisiken zu vermeiden. Zu Beginn der Eichfahrt wird am ortsfesten Absteuerschalter 32 jedes Trumes ein Presetsignal an die Winkelschrittencoder übertragen. Durch dieses Signal werden die Absolutwerte der Winkelschrittencoder mit dem durch die Absteuerschalter 32 bezeichneten Festpunkte im Schacht synchronisiert.

Bei einem synchronisierten System wird der Teufenfaktor, d.h. der Proportionalitätsfaktor zwischen den am Winkelschrittencoder erfassten Winkelschritte und der Teufe, wie folgt ermittelt:
Zunächst wird die Anzahl der Winkelschritte zwischen dem Absteuerschalter 32 und dem im unteren Schachtbereich montierten Absteuerschalter 34 erfasst. Die Distanz zwischen den beiden ortsfest angeordneten Schaltern ist bekannt und konstant. Der Teufenfaktor ergibt sich somit aus dem Verhältnis des konstanten Abstandswertes zwischen den Schachtschaltern und der dazu gehörenden Anzahl der ermittelten Winkelschritte am Winkelschrittencoder. Dabei wird für die Berechnung des Teufenfaktors im Trum 31 b die Position des Absteuerschalters 32 im Trum 31 b und des Absteuerschalters 34 im Trum 31 a verwendet. Entsprechend wird der Teufenfaktor für den Trum 31 a bestimmt, indem die Position des Absteuerschalters 32 im Trum 31 a und die Position des Absteuerschalters 34 im Trum 31 b als Grundlage genommen werden. Die Ergebnisse Prozedur werden als ungültig verworfen, sobald ein Fehler in der Teufenrechnung oder ein Defekt an den Schachtschaltern festgestellt wird.

Die Teufenfaktoren werden bei jedem Betrieb der Treibscheibe neu berechnet und zur Ermittlung der Teufe verwendet. Mit einem solchen Verfahren kann ein Verschleiß des Treibscheibenfutters selbsttätig ausgeglichen werden. Zur weiteren Synchronisation des Fahrweges mit den Winkelschrittencodern wird an einem oder beiden Schachtschaltern 32 ein Preset-Wert in Form eines festen Winkelschrittes in die Winkelschrittencoder übertragen.

Bei einem Aufholen erfolgt am Absteuerschalter 32 und bei einem Hängen erfolgt am Absteuerschalter 34 eine weitere Teufenkorrektur. Dabei wird der am Winkelschrittencoder errechnete Wert der Teufe mit dem Wert des Festpunktes verglichen. Die dabei ermittelte Differenz wird als ein Offset auf die Teufe addiert, sodass der Antrieb zielgenau gefahren wird. Mit einem solchen Mittel kann ein Seilrutsch oder eine Seildehnung bei der Teufenberechnung ausgeglichen oder auch festgestellt werden.

In Abhängigkeit von der Teufe werden Absteuerkurven und/oder Sollwerte für die Geschwindigkeit des Antriebs sowie eine Überwachungskurve für eine kontinuierliche Geschwindigkeitsüberwachung für die Fahrwegenden berechnet. Jede Absteuerkurve setzt sich zusammen aus einer Reihe von Teilgeraden Yᵢ = mᵢ (X + nᵢ), wobei Yᵢ ein Wert für die Sollgeschwindigkeit, x ein Teufenwert und n ein absoluter Teufenwert darstellt, der die Teufe für den Beginn der Geradengleichung angibt. Für jede der Teilgeraden Yᵢ wird die Steigung mᵢ und der Offset nᵢ berechnet und ein einen Datenbaustein, der als Teil der beiden SPS ausgebildet sein kann, abgelegt. Die Berechnungen der Absteuerkurven erfolgen sämtlich in beiden SPS. Sie werden auf Gleichheit überwacht. Bei einer Gestaltung mit einer möglichst geringen Zykluszeit innerhalb der SPS wird ein hinreichend großer Reaktionszeitraum zur Anlagensteuerung gewonnen.

Der errechnete Geschwindigkeitssollwert wird normiert und in Form eines Steuersignals an einen Antriebsregler übergeben. Dies ist insbesondere der bereits erwähnte Gleichstromsteller des Leonardumformers der Antriebsmaschine. Das Steuersignal ist jedoch auch zu Antriebsreglern anderer Bauart, wie beispielsweise Gleichstromstellern für Gleichstrommotore, Frequenzumrichter oder dergleichen andere Einheiten kompatibel. Dem Antriebsregler werden die Signale "Antrieb ein", "Richtung Antrieb" und "Geschwindigkeitssollwert" übergeben. Dieses Signal wird mit einem von einem Fördermaschinisten bedienten Handsollwertgeber verknüpft, womit jederzeit eine Ist-Geschwindigkeit des Antriebs kontinuierlich verändert werden kann.

Der Handsollwertgeber ist eine Kombination aus einem Sollwertpotentiometer und einem elektronischen Wandler. Durch diesen werden veränderbare Stromstärkewerte in Geschwindigkeitswerte umgesetzt. Der so gegebene Sollwert wird mit der Fahrkurve verglichen. Liegt der Sollwert des Handsollwertgebers über dem errechneten Sollwert der Fahrkurve, wird der Sollwert aus der errechneten Fahrkurve, der zur Steuerung des Antriebsreglers verwendet wird, übernommen. Somit führt auch eine Vollauslage des Handsollwertgebers dazu, dass die Fördermaschine selbsttätig absteuert.

Die Fahrkurve kann in ihrem Absteuerbeginn, der Verzögerung und der Beschleunigung in einem Visualisierungssystem, das über entsprechende Schnittstellen mit den beiden SPS verbunden ist, beeinflusst werden. Hierzu wird beispielsweise auf PC-Systeme zurückgegriffen, auf denen eine Visualisierungssoftware implementiert ist. Die Verbindung des PC-Systems mit den SPS erfolgt beispielsweise über einen MPI-Bus. Das PC-System ist zweckmäßigerweise redundant ausgelegt. Bei Ausfall eines PC kann die Visualisierung an dem anderen PC aufgerufen werden.

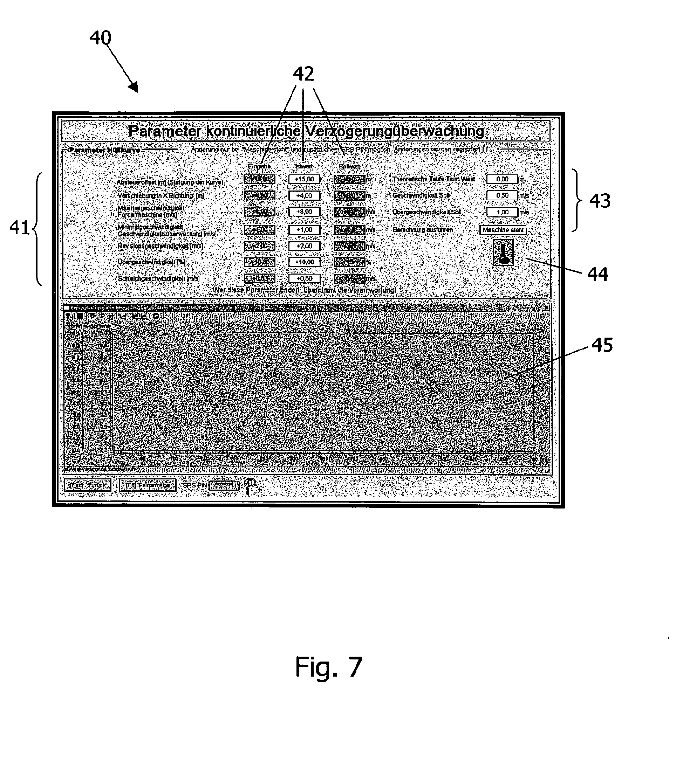

Eine beispielhafte Darstellung einer Anzeige der Fahrkurvenparameter ist in Fig. 7 gezeigt. Die Figur zeigt ein Eingabefenster 40 zur Vorgabe von Parametern für die erwähnte Fahrkurve. Das Eingabefenster enthält Eingabefelder 41 zur Vorgabe eines Kurvensteigung in Form eines Absteueroffsets, einer Maximalgeschwindigkeit, einer Minimalgeschwindigkeit zur Geschwindigkeitsüberwachung, einer Revisionsgeschwindigkeit, einer Übergeschwindigkeit und einer Schleichgeschwindigkeit. Mittels Eingabefeldern 42 ist es möglich, für jeden der genannten Parameter einen Wert einzugeben, einen Ist-Wert zu verfolgen und einen Sollwert vorzugeben. Eingabefelder 43 ermöglichen es, Teufen, Soll- und Über-Geschwindigkeiten für einen Trum vorzugeben. Ein Knopf 44 ermöglicht eine Berechnung der Fahrkurven, ein Diagramm 45 zeigt den Parameterverlauf graphisch an.

Aufbauend auf die errechnete Absteuerkurve wird die kontinuierliche Überwachungskurve durch die Aufskalierung mit einem Sicherheitsfaktor errechnet. Die von den Tachogeneratoren gelieferte Geschwindigkeit wird mit dieser Überwachungskurve dynamisch verglichen. Eine Sicherheitsbremse wird ausgelöst, sobald der Tachowert den errechneten Grenzwert übersteigt.

An den Schachtschaltern wird die errechnete Absteuerkurve auf ein Herunterlaufen überwacht. Durch einen dynamischen Vergleich des Wertes der Absteuerkurve mit der Ist-Geschwindigkeit wird gesichert, dass die Geschwindigkeit dem errechneten Sollwert folgt. Diese Überwachung ist vor allem bei einem automatischen Betrieb erforderlich. Sie kann im Handbetrieb vorgesehen sein.

Im Rahmen der Visualisierung werden für die kontinuierliche Geschwindigkeitsüberwachung vor allem zwei Parameter eingestellt. Dies ist zum einen eine prozentuale Übergeschwindigkeit auf der Grundlage einer Maximalgeschwindigkeit der Fördermaschine. Zum anderen wird eine Minimalgeschwindigkeit festgelegt, bei der eine Übergeschwindigkeit angezeigt wird.

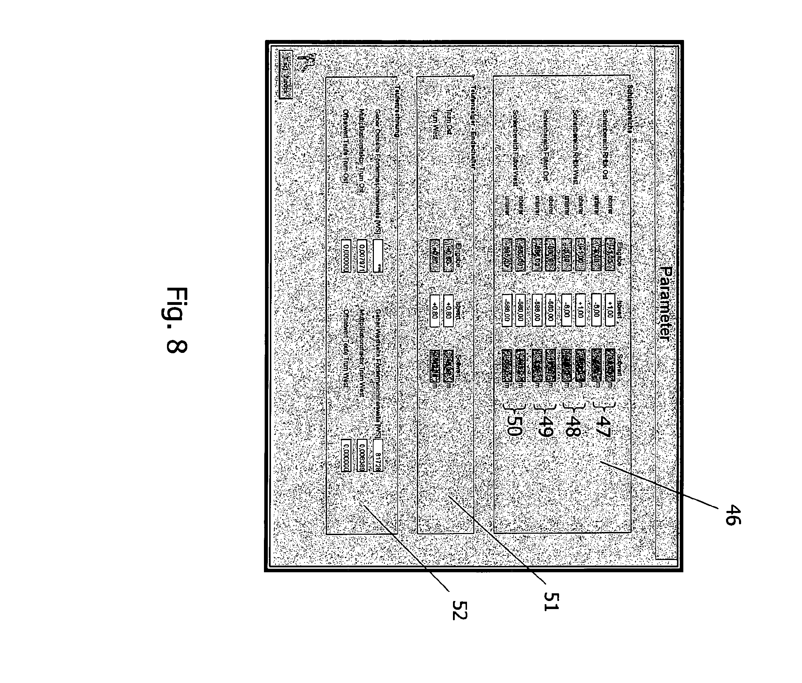

Zusätzlich zur punktweisen Geschwindigkeitsüberwachungseinrichtung und der kontinuierlichen Geschwindigkeitsüberwachung werden softwaremäßig noch so genannte "Todeskennlinien" definiert. Dabei handelt es sich um Geschwindigkeitsüberwachungskurven in Form von Geraden, die die Steuerung der Förderanlage im Bereich des Schachtendes beeinflussen und ansprechen, sobald alle anderen Überwachungsfunktionen des Fahrtreglers versagen. Fig. 8 zeigt eine beispielhafte Darstellung einer Anzeige zur Definition von Sohlenbereichen, Teufenzeigern und zur Teufenrechnung. Die Sohlenbereiche können mit einem Eingabefenster 46 definiert und in ihren Soll- und Istwerten verfolgt werden. Insbesondere ist es möglich, diese Angaben mittels Eingabefeldern 47 bis 50 für jeden Trum einzeln, für Füllorte und verschiedene Sohlenbereiche festzulegen. Eine Festlegung von Endschaltern für Teufenzeiger ist mit Eingabefeldern 51 möglich. Parameter für die Teufenrechnung, insbesondere Multiplikationsfaktoren und Offsetwerte und Geberstellungen für beide Trume können mit Eingabefeldern 52 festgelegt und verfolgt werden.

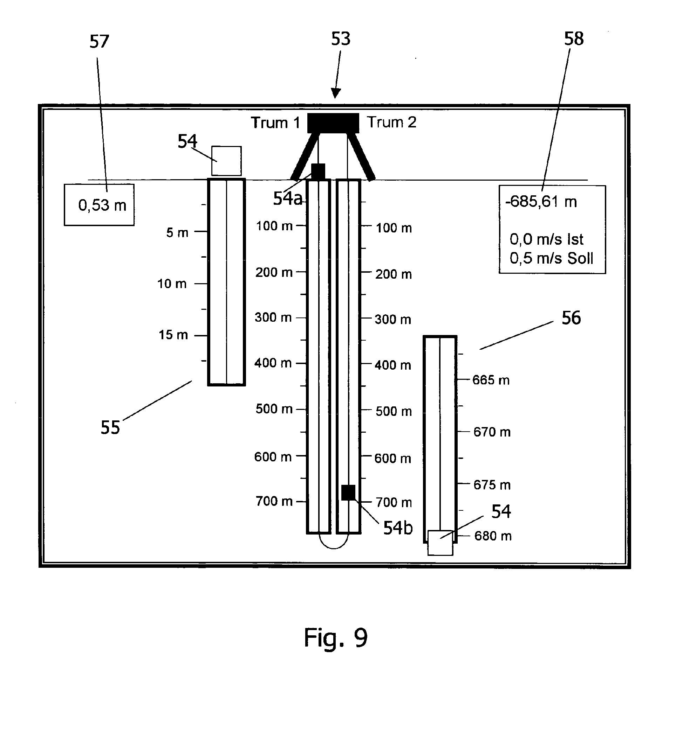

Fig. 9 zeigt eine Visualisierung der Förderanlage, mit der die Positionen der Förderkörbe und die Fördergeschwindigkeiten in einfacher Weise erfasst werden können. Die Visualisierung zeigt eine schematische Darstellung 53 von erstem und zweitem Trum mit einem angedeuteten Turmaufbau. Die Positionen der jeweiligen Fahrkörbe sind durch Indikatoren 54a und 54b dargestellt. An einer Skala an der Trumdarstellung 53 können die Positionen der Fahrkörbe, insbesondere deren Teufe, abgelesen werden.

Neben der Trumdarstellung 53 befinden sich Abschnittsdarstellungen 55 und 56, auf denen die Positionen der Fahrkörbe für jeden Trum mit einer höheren Auflösung angezeigt ist. In Verbindung damit werden die momentanen Positionen der Förderkörbe mittels Zahlenangaben in Anzeigeboxen 57 und 58 für jeden Trum angezeigt. Des weiteren erfolgt eine Anzeige der Ist- und der Soll-Geschwindigkeit.

Die in Fig. 9 gezeigte Visualisierung kann weitere, hier nicht gezeigte Anzeigefelder enthalten. So können beispielsweise Hinweise auf Betriebsstörungen, Selbstfahrten, telemetrische Zustandsdaten an ausgewählten Stellen des Antriebs und dergleichen weitere Informationen angezeigt werden.

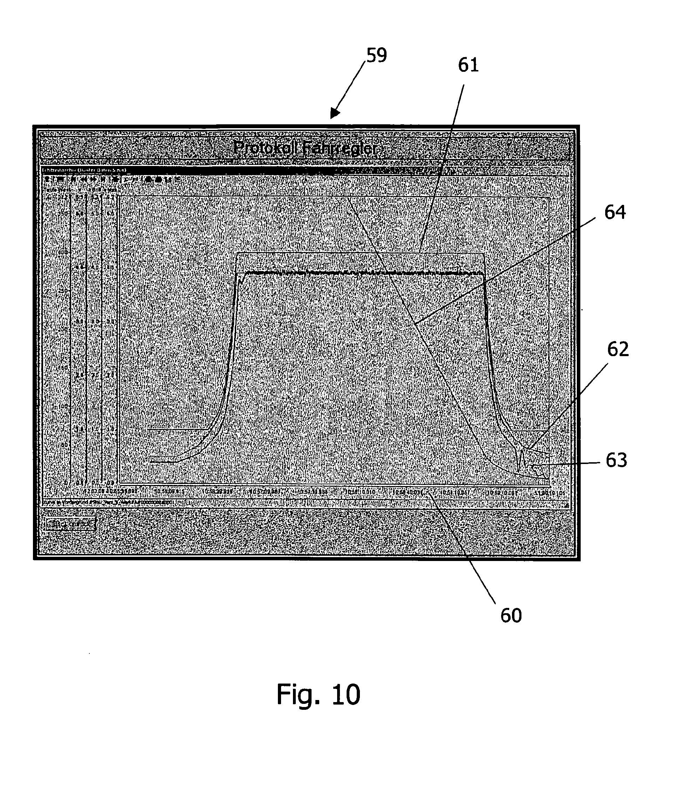

Fig. 10 zeigt ein beispielhaftes Fahrregler-Protokoll 59. Die Abszisse 60 des Diagramms enthält Zeitangaben, darüber sind die zeitlichen Verläufe der Überwachungskurve 61 für die Maximalgeschwindigkeit, einer darunter verlaufenden Kurve 62 für eine Sollgeschwindigkeit und eine um die Sollgeschwindigkeitskurve herum leicht schwankende gemessene Ist-Geschwindigkeit 63 dargestellt. Eine Kurve 64 zeigt die Zeitabhängigkeit des gemessenen Teufenwertes.

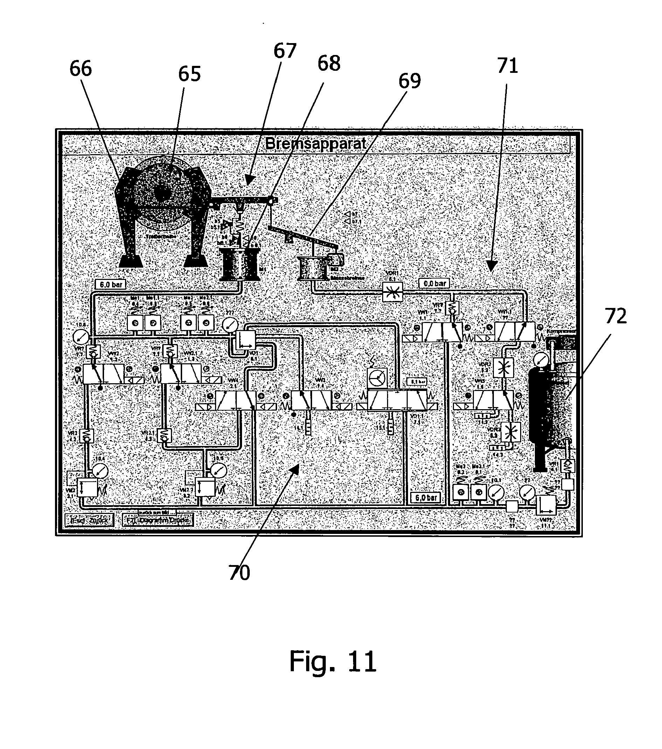

Fig. 11 zeigt eine Visualisierung des Bremsapparates, bei der die Zustände der im Bremskreislauf angeordneten Komponenten schematisch angezeigt werden. Die Visualisierung zeigt insbesondere eine schematische Darstellung 65 der Treibscheibe mit einem Bremsbackensymbol 66 und einer Visualisierung der Bremsmechanik 67. Dabei wird der Zustand der Hauptbremsmechanik in einer symbolischen Darstellung 68 und der Zustand einer als Sicherheitssystem dienenden Massebremse in einer weiteren Darstellung 69 angezeigt. Zusätzlich enthält die Visualisierung eine Darstellung 70 der Bremsleitungen und Ventile der Hauptbremseinrichtung und eine Darstellung 71 der Ventile zum Auslösen der Massebremse. Eine Kompressoranlage zum Erzeugen des Bremsdruckes ist in einer Darstellung 72 visualisiert. Als Grundlage für die in der Visualisierung gezeigten Zustände der Bremsanlage dienen Signale, die von den beteiligten Komponenten über die Profibus-Ankopplungen zu der ersten und zweiten SPS übertragen und von dort an das Computersystem zur weiteren Verarbeitung übermittelt werden.

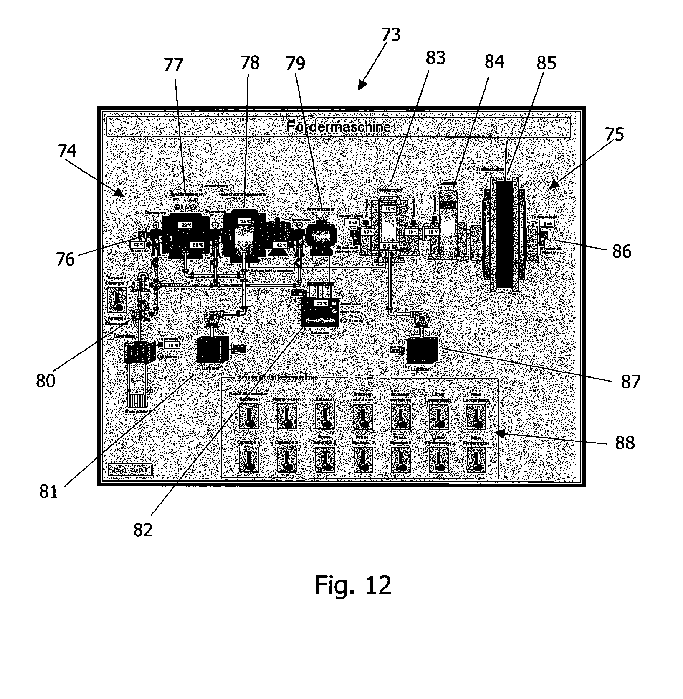

Fig. 12 zeigt eine Visualisierung 73 der bereits beschriebenen Komponenten der Fördermaschine. Die Visualisierung enthält eine Darstellung 74 des Leonardsatzes und eine Darstellung 75 der Antriebskomponenten. Die Visualisierung des Leonardsatzes enthält insbesondere eine Darstellung 76 eines Thermostates mit einer Anzeige der aktuellen Temperatur, eine Darstellung 77 des Synchronmotors mit Anzeigefeldern für Temperatur und Betriebszustand, eine Darstellung 78 des Gleichstromgenerators mit einer Temperaturanzeige und eine Darstellung 79 eines Anwurfmotors. Die Visualisierung des Leonardsatzes enthält unter anderem eine Visualisierung 80 eines Schmierkreislaufes des Leonardsatzes mit einer Darstellung einer Ölpumpenanordnung, eines Ölbehälters mit einer angeschlossenen Thermostatvorrichtung und einer Anzeige des Ölpressdruckes an verschiedenen Lagern innerhalb des Leonardumformers. Der Betriebszustand der genannten Komponenten wird durch Anzeigefelder und Signalpunkte visualisiert. Schließlich sind Visualisierungen 81 und 82 einer an dem Leonardsatz angeschlossenen Luftfiltereinheit und eines Anlassers vorgesehen. Letztere enthält unter anderem Signalindikatoren über dessen Ausfahrzustand und dessen Betriebstemperatur.

Die Darstellung 75 enthält eine Visualisierung 83 des Fördermotors, eine Visualisierung 84 des Getriebes und eine Visualisierung 85 der Treibscheibe. An einigen dieser Visualisierungen sind Anzeigefelder zum Ablesen einer momentanen Betriebstemperatur angeordnet. Weiterhin ist je eine Visualisierung 86 zur Anzeige der Tachogeneratoren und Winkelschrittencoder vorgesehen. Die Temperaturanzeige für den Fördermotor zeigt die Wirksamkeit einer mittels einer Visualisierung 87 dargestellten Luftfiltereinheit.

Für einen Reparaturbetrieb ist es nützlich, einzelne Komponenten gezielt anzusprechen und deren Zustand unabhängig von anderen Komponenten zu verändern. Hierzu wird eine Visualisierung 88 bereitgestellt. Diese beinhaltet insbesondere visualisierte Reparaturschalter für Antriebe, Kompressor und Anlasser, Schalter zum Ein- und Ausfahren des Anlassers oder auch Schalter zum Starten oder Abschalten von Ölpumpen für den Schmierölkreislauf oder der Lüfter im Bereich des Leonardumformers und/oder des Fördermotors.

Die Erfindung wurde anhand von Ausführungsbeispielen näher erläutert. Im Rahmen fachmännischen Handelns sind weitere Ausführungsformen möglich. Weitere Ausführungsformen ergeben sich insbesondere aus den Unteransprüchen.

### Bezugszeichenliste

- 1: Fahrtregelungseinheit
- 2: erstes speicherprogrammierbares Steuerungssystem
- 3: zweites speicherprogrammierbares Steuerungssystem
- 4: Signalgeber Fahrgeschwindigkeit
- 5: Signalgeber Fahrweg
- 6: Fördermaschine
- 7: DP/DP-Kopplereinheit
- 8: Tachogenerator
- 9: Schwellwertschalter
- 10: Schachtschalteranordnung
- 11: Winkelschrittencoder
- 12: erster Ein- und Ausgang, redundant
- 13: zweiter Ein- und Ausgang, redundant
- 14: dritter Ein- und Ausgang, redundant
- 15: vierter Ein- und Ausgang, redundant
- 16: fünfter Ein- und Ausgang
- 17a: sechster Ein- und Ausgang für Hardwaresignale
- 17b: siebenter Ein- und Ausgang für Hardwaresignale
- 18: achter Ein- und Ausgang, redundant
- 19: erste Schnittstelle für Automatikbetrieb
- 20: zweite Schnittstelle für Automatikbetrieb
- 21: erste Bustrennung
- 22: zweite Bustrennung
- 23: Eingang für Gleichlaufüberwachung
- 24: Ausgang für Gleichlaufüberwachung
- 25: Schaltschütz
- 26: Schaltmechanik
- 27: Gleichstrommotor
- 28: Getriebe
- 29: Treibscheibe
- 30: Zahnriemenvorrichtung
- 31 a: erster Trum
- 31 b: zweiter Trum
- 32: erster Absteuerschalter
- 33: zweiter Absteuerschalter
- 34: dritter Absteuerschalter
- 35: Schalter Rasenbank
- 36: Schalter Füllort
- 40: Parameterfenster
- 41: Eingabefelder für Kurvenform
- 42: Eingabe- und Anzeigefelder für Kurvenparameter
- 43: Eingabefelder für Teufen und Geschwindigkeiten
- 44: Start Fahrkurvenberechenung
- 45: Diagramm für Parameterverlauf
- 46: Eingabefenster Sohlendefinition
- 47: Eingabefelder für erste Sohlenbereiche am ersten Trum
- 48: Eingabefelder für erste Sohlenbereiche am zweiten Trum
- 49: Eingabefelder für zweite Sohlenbereiche am ersten Trum
- 50: Eingabefelder für zweite Sohlenbereiche am zweiten Trum
- 51: Eingabefelder zum Einrichten für Endschalter zur Teufenanzeige
- 52: Eingabefelder für Parameter zur Teufenberechnung
- 53: Trumanzeige, Übersicht
- 54a: Indikator Förderkorb, erster Trum
- 54b: Indikator Förderkorb, zweiter Trum
- 55: Abschnittsanzeige erster Trum
- 56: Abschnittanzeige zweiter Trum
- 57: Anzeigebox für ersten Trum
- 58: Anzeigebox für zweiten Trum
- 59: Fahrreglerprotokoll-Anzeige
- 60: Zeitabszisse
- 61: Überwachungskurve Maximalgeschwindigkeit
- 62: Kurve Sollgeschwindigkeit
- 63: Kurve Ist-Geschwindigkeit
- 64: Kurve Teufenwert
- 65: Darstellung Treibscheibe
- 66: Bremsbackensymbol
- 67: Darstellung Bremsmechanik
- 68: Darstellung Hauptbremsmechanik
- 69: Darstellung Massebremse
- 70: Darstellung Bremsleitungen
- 71: Darstellung Ventile
- 72: Darstellung Kompressoranlage
- 73: Visualisierung Fördermaschine
- 74: Darstellung Leonardsatz
- 75: Darstellung Antriebskomponenten
- 76: Darstellung Thermostat
- 77: Darstellung Synchronmotor
- 78: Darstellung Gleichstromgenerator
- 79: Darstellung Anwurfmotor
- 80: Darstellung Schmierkreislauf
- 81: Darstellung Luftfilter
- 82: Darstellung Anlasser
- 83: Darstellung Fördermotor
- 84: Darstellung Getriebe
- 85: Darstellung Treibscheibe
- 86: Darstellung Tachogenerator
- 87: Darstellung Luftfiltereinheit
- 88: Visualisierung Reparaturzustände

## Patentansprüche

1. Vorrichtung zur Fahrtregelung für eine ein- oder doppeltrümige Förderanlage,
**gekennzeichnet durch**
eine Fahrtregelungseinheit (1) aus mindestens einem ersten speicherprogrammierbaren Steuerungssystem (2) als ein Führungs- und Überwachungsteil zum Ausführen einer Steuerung für eine Fördermaschine und einem zweiten speicherprogrammierbaren Steuerungssystem (3) zum Ausbilden eines redundanten zweiten Führungs- und Überwachungsteils in Verbindung mit an einer Antriebsseite eines Seilträgers und/oder an dem Seilträger angeordneten Signalgebern für eine Fahrgeschwindigkeit (4) und Signalgebern für einen Fahrweg (5).

2. Vorrichtung nach Anspruch 1,
**dadurch gekennzeichnet, dass**
das erste speicherprogrammierbare Steuerungssystem (2) und das zweite speicherprogrammierbare Steuerungssystem (3) voneinander verschieden ausgebildete Prozessoreinheiten und Betriebssysteme aufweisen.

3. Vorrichtung nach Anspruch 1 und 2,
**dadurch gekennzeichnet, dass**
das erste und das zweite speicherprogrammierbare Steuerungssystem (2, 3) über eine DP/DP-Kopplereinheit (7) miteinander verbunden sind.

4. Vorrichtung nach einem der vorhergehenden Ansprüche,
**dadurch gekennzeichnet, dass**
als Signalgeber für eine Fahrgeschwindigkeit (4) ein netzspannungsunabhängiger Tachogenerator (8) mit einem Schwellwertschalter (9) zum Erfassen einer Übergeschwindigkeit vorgesehen ist.

5. Vorrichtung nach einem der vorhergehenden Ansprüche,
**dadurch gekennzeichnet, dass**
eine rückwirkungsfrei zuschaltbare Prüfeinrichtung für eine punktweise Geschwindigkeitsüberwachung mit einer in einem Absteuer- und/oder einem Verzögerungsbereich montierten Schachtschaltanordnung vorgesehen ist.

6. Vorrichtung nach einem der vorhergehenden Ansprüche,
**dadurch gekennzeichnet, dass**
als Signalgeber für den Fahrweg ein Winkelschrittencoder (11) vorgesehen ist

7. Vorrichtung nach einem der vorhergehenden Ansprüche,
**dadurch gekennzeichnet, dass**
eine Profibus-DP-Verbindung zur Signalübertragung von dem Tachogenerator (8) und dem Winkelschrittencoder (11) an das erste und/oder zweite speicherprogrammierbare Steuerungssystem (2, 3) vorgesehen ist.

8. Vorrichtung nach einem der vorhergehenden Ansprüche,
**dadurch gekennzeichnet, dass**
das erste und das zweite speicherprogrammierbare Steuerungssystem (2, 3) je einen Ausgang (23) und einen Eingang (24) für einen Signalaustausch für eine gegenseitige Gleichlaufüberwachung aufweisen.

9. Vorrichtung nach Anspruch 8,
**dadurch gekennzeichnet, dass**
der Aus- und Eingang (23, 24) auf nach dem Ruhestromprinzip angesteuerte Schütze (25) gelegt sind.

10. Verfahren zum Ausführen einer Fahrtreglung für eine ein-oder doppeltrümige Förderanlage,
**gekennzeichnet durch**
ein Verwenden eines zweikanaligen diversitären Auswertesystems mit hardware-verschiedenen speicherprogrammierbaren Steuerungssystemen zum Betreiben jeweils eines Teilsicherheitskreises, wobei jeder Teilsicherheitskreis über getrennte Schützkontakte in einen Sicherheitskreis der Förderanlage eingebunden wird und beide Kanäle des Auswertesystems über eine DP/DP-Kopplung einen Signalaustausch ausführen.

11. Verfahren nach Anspruch 10,
**dadurch gekennzeichnet, dass**
für eine Überwachung einer Fahrgeschwindigkeit innerhalb eines Schachtes eine punktweise Geschwindigkeitsüberwachung und/oder ein Erzeugen geschwindigkeitsabhängiger Spannungssignale mittels Tachogeneratoren erfolgt, wobei durch jedes speicherprogrammierbare Steuerungssystem eine teufenabhängige Geschwindigkeit für jeden Kanal errechnet und verglichen wird.

12. Verfahren nach einem der Ansprüche 10 oder 11,
**dadurch gekennzeichnet, dass**
durch jedes speicherprogrammierbares Steuersystem Soll-Geschwindigkeitswerte errechnet werden, wobei die Soll-Geschwindigkeitswerte an einen Leistungsteil einer Antriebsvorrichtung ausgegeben werden.

13. Verfahren nach einem der Ansprüche 10 bis 12,
**dadurch gekennzeichnet, dass**
teufenabhängige Absteuerkurven und/oder Sollwerte für eine Geschwindigkeit des Antriebs und/oder eine Überwachungskurve für eine kontinuierliche Geschwindigkeitsüberwachung mit folgenden Verfahrensschritten erzeugt werden:
- Erzeugen einer Menge von teufenabhängigen Sollgeschwindigkeitsteilgeraden (Yᵢ) mit einem Offsetparameter (nᵢ) und einem Steigungsparameter (mᵢ),
- redundantes Errechnen des Steigungsparameters (mᵢ) und des Offsetparameters (nᵢ) für jede Sollgeschwindigkeitsteilgerade in jedem speicherprogrammierbaren Steuersystem mit einer Gleichheitsüberwachung,
- Normieren des Geschwindigkeitssollwertes und Übergeben an einen Antriebsregler.

14. Verfahren nach einem der Ansprüche 10 bis 13,
**dadurch gekennzeichnet, dass**
die Überwachungskurve durch eine Skalierung aus der Absteuerkurve errechnet wird, wobei eine gemessene Ist-Geschwindigkeit dynamisch mit den Werten der Überwachungskurve verglichen wird und bei einem Überschreiten eine Sicherheitsbremse ausgelöst wird.

15. Verfahren nach einem der Ansprüche 10 bis 14,
**dadurch gekennzeichnet, dass**
bei einem Ausfall der Fahrtregelung ein Aktivieren und Ansprechen von in einem Schachtende wirksamen Grenzüberwachungskurven erfolgt.
